Europäisches Patentamt

European Patent Office

Office européen des brevets

(19)

(11) Veröffentlichungsnummer: **0 000 386**
**B1**

(12) **EUROPÄISCHE PATENTSCHRIFT**

(45) Veröffentlichungstag der Patentschrift: **11.08.82**

(21) Anmeldenummer: **78100338.9**

(22) Anmeldetag: **10.07.78**

(51) Int. Cl.³: **C 08 J 5/18, C 08 L 67/02**

(54) Biaxial gestreckte Polyesterfolie.

(30) Priorität: **13.07.77 JP 83025/77**

(43) Veröffentlichungstag der Anmeldung:
**24.01.79 Patentblatt 79/2**

(45) Bekanntmachung des Hinweises auf die Patenterteilung:
**11.08.82 Patentblatt 82/32**

(84) Benannte Vertragsstaaten:
**DE FR GB LU NL**

(56) Entgegenhaltungen:
**DE - A - 2 431 076**
**DE - B - 1 769 534**
**FR - A - 2 295 066**
**US - A - 2 744 087**
**US - A - 3 284 331**
**US - A - 3 309 299**

(73) Patentinhaber: **TORAY INDUSTRIES, INC.**
**2, Nihonbashi-Muromachi 2-chome Chuo-ku**
**Tokyo 103 (JP)**

(72) Erfinder: **Deguchi, Yukichi**
**c/o Shiga factory TORAY INDUSTRY**
**1-1 chome, Sonoyama Otsu-shi, Shiga-ken (JP)**
Erfinder: **Yabe, Kenji**
**c/o Shiga factory TORAY INDUSTRY**
**1-1 chome, Sonoyama Otsu-shi, Shiga-ken (JP)**
Erfinder: **Okamoto, Satoru**
**c/o Shiga factory TORAY INDUSTRY**
**1-1 chome, Sonoyama Otsu-shi, Shiga-ken (JP)**
Erfinder: **Minami, Satoyuki**
**c/o Shiga factory TORAY INDUSTRY**
**1-1 chome, Sonoyama Otsu-shi, Shiga-ken (JP)**

(74) Vertreter: **Wettlauffer, Willy, Dr. et al,**
**KALLE Niederlassung der Hoechst AG**
**Patentabteilung Postfach 3540**
**D-6200 Wiesbaden (DE)**

# 0 000 386

## Biaxial gestreckte Polyesterfolie

Die Erfindung betrifft eine biaxial gestreckte Polyesterfolie mit ausgezeichneter Bedruckbarkeit, Kochbeständigkeit, Gleitfähigkeit, sowie Haftung gegenüber verschiedenen Bindemitteln.

' Biaxial gestreckte Polyesterfolien zeichnen sich durch ihre Transparenz, ihre guten mechanischen Eigenschaften und ihre Formbeständigkeit aus. Sie werden daher allgemein als Verpackungsfolien, als Grundfolien für Tonträger- und Computerfolien, Magnetbänder und für graphische Zwecke usw.. verwendet.

Innerhalb dieser Anwendungsgebiete treten jedoch einige Mängel auf:

(1) Zur Bedruckung der biaxial gestreckten Polyesterfolien benötigt man Spezialdruckfarben. Druckfarben wie sie z.B. für Zellglas verwendet werden, sind nicht für die herkömmlichen Polyesterfolien geeignet.

(2) Die Polyesterfolien haben ein schlechtes Haftvermögen gegenüber verschiedenen Bindemitteln, die zur Herstellung von Magnetbändern und für graphische Zwecke verwendet werden müssen. Für diese Anwendungen muß daher eine Grundierung aufgetragen werden.

(3) Gelegentlich wird eine Coronabehandlung in nomaler Luft durchgeführt (s. z.B. FR—A 22 95 066) (nachfolgend "ACD-Behandlung" genannt), um das Haftvermögen von Druckfarben, verschiedenen Bindemitteln usw. zu verbessern. Obwohl mit der ACD-Behandlung ein gewisse Verbesserung der Anfangshaftung erzielt wird, nimmt das Haftvermögen der Folien bei Lagerung infolge Alterung stark ab. Das bedeutet, daß eine Verbesserung des Haftvermögens durch eine solche Coronabehandlung praktisch unmöglich ist. Außerdem wird durch die ACD-Behandlung die Gleitfähigkeit erniedrigt und es kommt daher leicht zum Blocken beim Auf- oder Abwickeln oder bei Weiterbehandlungsverfahren.

Aus der DE—PS 17 69 534 ist bekannt, daß man insbesondere bei Polypropylenfolien oder Polyestern ein Haftverbesserung gegenüber einer heißsiegelfähigen Beschichtung, insbesondere einer solchen aus Polyvinylidenchloridcopolymerisaten herbeiführen kann, wenn man die Folie einer Coronabehandlung in Stickstoff oder in Luft-Stickstoffgemischen mit bis zu 15 Volumenprozent Sauerstoff unterwirft. Diese Patentschrift konnte jedoch keinen Hinweis auf die vorliegende erfindungsgemäße Folie geben.

Es stellte sich somit die Aufgabe, eine biaxial gestreckte Polyesterfolie zu schaffen, die die genannten Mängel der bisherigen Folien nicht aufweist.

Gelöst wird die gestellte Aufgabe durch eine biaxial gestreckte und in Stickstoffatmosphäre coronabehandelte Polyesterfolie, deren kennzeichnendes Merkmal darin besteht, daß sid aus einem Copolyester aufgebaut ist aus

A  Resten zweibasischer Säuren, in denen mindestens 90 Molprozent aus Terephthalsäureeinheiten bestehen und

B Glykolen, die 0,1 bis 3,0 Gewichtsprozent eines oder mehrerer Poly(alkenoxid)glykole mit einem Molekulargewicht von 500 bis 40 000, vorzugsweise 800 bis 30 000 enthalten

und sie mit einer Energie zwischen 10 und 100 W·min/m² coronabehandelt ist.

Die erfindungsgemäße Folie hat die nachfolgend beschriebenen hervorragenden Eigenschaften:

(1) Die Folie weist eine ausgezeichnete Haftung gegenüber den bekannten Druckfarben für Zellglas auf. Darüber hinaus hat eine mit Polyäthylen kaschierte Folie bei der Verwendung als Verpackungsmaterial eine ausgezeichnete Kochbeständigkeit.

(2) Die Haftung auf der Folie verschiedener Bindemittel ist so gut, daß sie keine Grundierung benötigt. Schwierigkeiten beim Beschichtungsvorgang werden infolgedessen vermindert, und die Produktivität ist im Vergleich zu herkömmlichen Polyesterfolien verbessert.

(3) Die Folie hat eine gute Gleitfähigkeit.

(4) Das Haftvermögen der Folie nimmt bei Lagerung infolge Alterung nicht ab.

Zu den innerhalb der Erfindung verwendbaren Poly(alkylenoxid)glykolen gehören: Poly-(alkylenoxid)-glykole, z.B. Poly-(äthylenoxid)-glykol (PEG), Poly-(propylenoxid)-glykol (PPG), Poly-(tetramethylenoxid)-glykol (PTMG), Copolymerisate von Äthylenoxid mit Propylenoxid (PEG·PPG), Polyglykolderivate mit Alkoxygruppen, z.B. Methoxygruppen, erhalten durch Substitution der Hydroxylgruppen von Poly-(alkenoxid)-glykolen und Poly-(phenoxyäthylen)-glykol.

Eines oder gleichzeitig mehrere dieser Poly(alkylenoxid)glykole können erfindungsgemäß verwendet werden; dabei sind PEG, PPG, PEG·PPG und PTMG besonders geeignet.

Im Hindblick auf die Transparenz und das Haftvermögen der Folie sind im allgemeinen Poly(alkylenoxid)glykole mit durchschnittlichen Molekulargewichten von 500 bis 40 000, vorzugsweise von 800 bis 30 000, geeignet. Im Falle von PEG z.B. 800 bis 30 000 (vorzugsweise 1 000 bis 20 000), im Falle von PEG · PPG 5 000 bis 30 000 (vorsugsweise 8 000 bis 20 000) und im Falle von PTMG 600 bis 5 000 (vorzugsweise 800 bis 4 000).

Bei einem Molekulargewicht unter 500 sind die Thermostabilität, die Formbeständigkeit bei hoher Temperatur und das Haftvermögen der hergestellten Folien schlecht. Bei einem Molekulargewicht über 40 000 dagenen weist die Folie eine mangelhafte Transparenz und ein schlechtes Haftvermögen auf.

Der Gehalt an Poly(alkylenoxid)glykolen liegt zwischen 0,1 und 3,0% (vorzugsweise 0,3 bis 2,5%),

2

# 0 000 386

bezogen auf das Gesamtgewicht des Polyesters. Bei einem Gehalt von weniger als 0,1 Gewichtsprozent ist die Verbesserung des Haftvermögens nicht ausreichend. Ein Gehalt von über 3,0 Gewichtsprozent führt dagegen zu einer Beeinträchtigung der Formbeständigkeit und der Transparenz der Folie. Außerdem nimmt des Haftvermögen der Folie durch eine Kochbehandlung beim Einsatz als Verpackungsmaterial oder durch Alterung unter hoher Temperatur und hoher Feuchtigkeit stark ab. Insbesondere wird die Folie bei der Kochbehandlung leicht trüb.

Der innerhalb dieser Erfindung verwendete Begriff "Poly(alkylenoxid)glykol enthaltender Polyester" bezieht sich auf Polyester mit copolymerisierten Poly(alkylenoxid)glykol-Einheiten, von denen jedoch ein Teil aus einer Mischung von Polyester mit Poly(alkenoxid)glykolen bestehen kann, sofern die Menge so gering ist, daß das Haftvermögen der Folie nicht darunter leidet.

Die Poly(alkylenoxid)glykole können zum Zeitpunkt des Esteraustausches und/oder der Veresterung und/oder der Polykondensation und/oder unmittelbar vor Abschluß der Polykondensation zugegeben werden.

Der in dieser Erfindung beschriebene Polyester baut sich aus Resten zweibasiger Säuren und Resten von Glykolen auf. Mindestens 90 Molprozent der Säurereste sind Terephthalsäureeinheiten. Polyäthylenterephthalat (PET) oder PET-Copolymerisate sind bevorzugt.

Der auf diese Weise hergestellte, Poly(alkylenoxid)glykole enthaltende Polyester wird dann nach den üblichen Folienherstellungs- und -streckverfahren zu einer biaxial gestreckten Folie verarbeitet, z.B. durch aufeinanderfolgendes biaxiales Strecken, gleichzeitiges Strecken oder nach Verfahren, bei denen nach dem biaxialen Strecken ein zweites Längsstrecken durchgeführt wird.

Die erfindungsgemäße biaxial gestreckte Polyesterfolie hat, je nach Verwendungszweck, im allgemeinen Dicken von 2 bis 700 $\mu m$, vorzugsweise 4 bis 200 $\mu m$.

Die biaxial gestreckte Folie wird dann in einer im wesentlichen aus Stickstoff bestehenden Atmosphäre, in der die Sauerstoffkonzentration weniger als 0,1 Volumenprozent ausmacht, einer Coronabehandlung unterzogen (nachfolgend als "NCD-Behandlung" bezeichnet). Bei der NCD-Behandlung ist die Behandlungsatmosphäre (insbesondere die Konzentration des Restsaurestoffs) von Bedeutung. Liegt die Konzentration des Restsauerstoffs über 0,1 Volumenprozent, so ist die Verbesserung des Haftvermögens nicht ausreichend, und das Haftvermögen der Folie nimmt durch den Alterungseffekt stark ab, außerdem wird die Gleitfähigkeit der Folie verschlechtert. Das bedeutet, daß die Konzentration des Restsauerstoffs unter 0,1 Volumenprozent (vorsugsweise unter 0,05 Volumenprozent) liegen muß. Als Ergebnis dieser Behandlung zeigt die Folie praktisch keine Verminderung des Haftvermögens durch den Alterungseffekt.

Bei der NCD-Behandlung kann die an die Elektrode anzulegende Spannung ein Wechselstrom beliebiger Wellenform sein. Eine Sinuswelle mit einer Spannung von 5 bis 70 kV (von Spitze zu Spitze) und einer Frequenz von 50 Hz bis 50 MHz ist vorteilhaft. Die Summe der auf die Folie aufgebrachten elektrischen Energie kann im allgemeinen zwischen 10 und 100 W·min (vorzugsweise 15 bis 60 W·min) pro Quadratmeter zu behandelnder Folienoberfläche betragen.

Die elektrische Energie kann entweder in einem Arbeitsgang oder in mehreren Stufen aufgebracht werden. Bei extrem dünnen Folien sollte die Aufladung mit elektrischer Energie in mehr als zwei Stufen innerhalb einer Behandlungsreihe aufgeteilt werden, denn es besteht die Gefahr, daß Falten und Durchschläge auftreten.

Im Hinblick auf die Bedruckbarkeit und die Haftung gegenüber Bindemitteln ist ein Energieaufwand von mehr als 10 W·min/m² bevorzugt. Andererseits sollten unter 100 W·min/m² an Energie aufgewandt werden, da sonst die Bedruckbarkeit oder die Haftung gegenüber Bindemitteln durch "Uberbehandlung" abnehmen. Ein Energieaufwand unter 100 W·min/m² ist auch mit Rücksicht auf die Verbundfestigkeit einer mit Polyäthylen kaschierten Folie nach der Kochbehandlung, die Blockneigung, die Gleitfähigkeit, die Faltenbildung usw. bevorzugt.

Um bei der NCD-Behandlung die maximale Wirksamkeit zu erzielen, sollte diese Behandlung im Ablauf der Folienherstellung zwischen dem biaxialen Verstrecken und dem Aufwickelvorgang durchgeführt werden. Die NCD-Behandlung kann jedoch auch nach dem Aufwickeln stattfinden.

Es ist zwar nicht ersichtlich, aus welchem Grund die Polyesterfolie nach dieser Erfindung solche ausgezeichneten Eigenschaften in Bezug auf Haftvermögen, Gleitfähigkeit, Kochbeständigkeit usw. aufweist, im folgenden wird aber anhand von Daten dargelegt, daß die Ergebnisse dieser Erfindung mit den herkömmlichen Teckniken nicht erreicht werden können.

Erstens weist eine unbehandelte biaxial gestreckte, Poly(alkylenoxid)-glykole enthaltende Polyesterfolie keine so starke Verbesserung des Haftvermögens, insbesondere der Haftung von Druckfarben für Cellulosefolien, Bindemitteln, z.B. Nitrocellulose, Copolymerisate aus Vinylchlorid und Vinylacetat usw. auf. Wird an der Poly(alkylenoxid)glykole enthaltenden Folie zur Verbesserung des Haftvermögens die ACD-Behandlung durchgeführt, so wird zwar die anfängliche Haftung verbessert, die behandelte Folie weist jedoch im praktischen Gebrauch einige Mängel auf, z.B. erstens eine erhebliche Verminderung des Haftvermögens durch Alterung unter hoher Temperatur und hoher Feuchtigkeit, und zweitens eine schlecht Kochbeständigkeit der kaschierten Folie.

Außerdem zeigt sich bei der NCD-Behandlung an der herkömmlichen biaxial gestreckten Polyesterfolie folgendes:

Wenn die bei der NCD-Behandlung angewandte elektrische Energie gering ist, wird das Haftvermögen

3

nicht genügend verbessert. Ist die elektrische Energie dagegen hoch, so weist die Folie Mängel auf, z.B. eine schlechte Gleitfähigkeit, eine starke Verminderung des Haftvermögens durch Alterung unter hoher Temperatur und hoher Feuchtigkeit und eine mangelhafte Kochbeständigkeit der Kaschierten Folie. Eine Polyesterfolie mit ausreichendem Haftvermögen kann also nicht erzielt werden.

Nur wenn die spezifische Oberflächenbehandlung an einer Polyesterfolie mit den bestimmten, in dieser Erfindung beschriebenen Bestandteilen ausgeführt wird, kann man die eingangs erwähnte Folie mit den hervorragenden Eigenschaften herstellen.

Die erfindungsgemäße Polyesterfolie kann weitgehend in den Anwendungsgebieten eingesetzt werden, in denen ein ausgezeichnetes Haftvermögen und eine sehr gute Gleitfähigkeit ohne Beeinträchtigung der guten Eigenschaften der herkömmlichen biaxial gestreckten Polyesterfolien verlangt werden. Sie kann z.B. für Verpackungszwecke, für Magnetbänder und für graphische Zwecke verwendet werden.

Nachfolgend wird die Erfindung anhand von Beispielen näher erläutert, und es werden Verfahren zur Beurteilung der Folieneigenschaften genannt.

1. *Bedruckbarkeit*

Eine Druckfarbe für Zellglas ("CC-uni" weiß, Hersteller Tokyo Ink Co.) wird mit Dosierstäben oder Rasterwalzen in einer etwa 3 g/m$^2$ dicken Druckschicht auf die behandelte Folienoberfläche aufgedruckt. Die so bedruckte Folie wird während einer Minute bei 60°C getrocknet. Unmittelbar nach dem Bedrucken und Trocknen oder nach 48-stündiger Alterung bei einer Temperatur von 50°C und 100% relativer Feuchtigkeit wird ein Schälversuch mit einem Klebestreifen auf Zellglasbasis ("Cellotape", Hersteller Nichiban Co.) durchgeführt.

Die Beurteilungskriterien sind wie folgt:

5: Die Druckfarbenschicht ist nach dem Schälversuch völlig unversehrt.
—ausgezeichte Haftung—

4: Mehr als 90% Fläche der Druckfarbenschicht verbleiben nach dem Schälversuch.
—gute Haftung—

3: Zwischen 75% und 90% Fläche der Druckfarbenschicht verbleiben nach dem Schälversuch.
—befriedigende Haftung—

2: Zwischen 50% und 75% Fläche der Druckfarbenschicht verbleiben nach dem Schälversuch.
—unzureichende Haftung—

1: Weniger als 50% Fläche der Druckfarbenschicht verbleiben nach dem Schälversuch.
—schlechte Haftung—

2. *Polyäthylen-Kaschierversuch*

Auf die zuvor wie in 1. mit der Druckfarbe für Zellglas bedruckte Folie wird ein Urethan-Grundiermittel ("Nippollan" 3016 und "Coronate" L, Hersteller Nippon Polyurethane Co.) in einer etwa 0,8 g/m$^2$ dicken Schicht aufgetragen. Die vorgestrichene Folie wird dann wie in 1. getrocknet und anschließend mit Polyäthylen ("Sumikathene" L 705, Hersteller Sumitomo Chem. Co.) in einer Schichtdicke von 50 $\mu$m extrusionsbeschichtet. Die Verbundfestigkeit zwischen dem Träger und den Kaschierungsschichten wird unter verschiedenen Bedingungen gemessen.

Beispiel 1

(1) *Polymerisation des copolymerisierte PEG-Einheiten enthaltenden PET*

Die folgenden Materialien werden in einen Autoklaven eingesetzt:

| | | |
|---|---|---|
| Dimethylterephthalat | 100 | Gewichtsteile |
| Athylenglykol | 70 | Gewichtsteile |
| PEG (durchschnittliches Molekulargewicht 6 000) | 3 | Gewichtsteile |
| Mangangacetat | 0,035 | Gewichtsteile |

Der Esteraustausch wird nach dem bekannten Verfahren ausgeführt. Dem entstandenen Produkt werden Antimontrioxid (0,03 Gewichtsteile) und Trimethylphosphat (0,04 Gewichtsteile) zugesetzt. Die Temperatur des Autoklaven wird allmählich erhöht, während der Druck gleichzeitig allmählich reduziert wird. Die Polykondensation erfolgt schließlich bei einer Temperatur von 287°C und einem Druck von weniger als 0,67 m bar. Das so erhaltene Polymerisat (mit 3 Gewichtsprozent PEG) hat eine Intrinsicviskosität von 0,618 (gemessen in o-Chlorphenol bei 25°C) und einen Erweichungspunkt von 258,8°C (Temperatur, bei der, gemessen nach der Penetrationsmethode, die Prüfnadel 5 mm tief in den polymeren Prüfkörper eindringt, wenn dieser mit einer Geschwindigkeit von 6°C/5 min erwärmt wird).

**0 000 386**

*(2) Polymerisation des copolymerisierte PTMG-Einheiten enthaltenden PET*

Dimethylterephthalat (100 Gewichtsteile), Äthylenglykol (70 Gewichtsteile) und Calciumacetat (0,09 Gewichtsteile) werden in einen Autoklaven eingesetzt, und der Esteraustausch wird nach dem bekannten Verfahren durchgeführt. Anschließend werden PTMG (durchschnittliches Molekulargewicht 2 000, 3 Gewichtsteile), Antimontrioxid (0,03 Gewichtsteile) und Trimethylphosphat (0,04 Gewichtsteile) hinzugefügt. Als Ergebnis der Polykondensation unter den gleichen Bedingungen wie in (1) erhält man schließlich ein Polymerisat mit 3 Gewichtsprozent PTMG, einer Intrinsicviskosität von 0,621 und einem Erweichungspunkt von 258,2°C.

*(3) Polymerisation des copolymerisierte PEG.PPG-Einheiten enthaltenden PET*

Esteraustausch und Polykondensation werden wie unter (2) beschrieben durchgeführt, allerdings wird kein PTMG zugesetzt. In einem späteren Stadium des Polykondensationsvorganges, zu dem Zeitpunkt, an dem die Intrinsicviskosität etwa 0,45 erreicht hat, werden 3 Gewichtsteile PEG·PPG (durchschnittliches Molekulargewicht 18 000) hinzugefügt. Die Polykondensation wird noch 50 Minuten fortgesetzt, bei einer Temperatur von 287°C und einem Druck von 0,67 mbar. Das erhaltene Polymerisat hat eine Intrinsicviskosität von 0,623, einen Erweichungspunkt von 259,6°C und enthält 3 Gewichtsprozent PEG·PPG.

*(4) Polymerisation des copolymerisierte PPG-Einheiten enthaltenden PET*

Das Polymerisat mit einer Intrinsicviskosität von 0,620, einem Erweichungspunkt von 258,0°C und einem Gehalt an PPG von 3 Gewichtsprozent ergibt sich durch einen Esteraustausch und eine Polykondensation, die in der gleichen Weise durchgeführt werden, wie unter (1) beschrieben.

*Folienherstellung*

Die Polymerisate werden mit Polyäthylenterephthalat in der Weise versetzt, daß sich Mischungen mit einem Gehalt von 0,5 Gewichtsprozent an Poly(alkylenoxid)glykolen ergeben. Die Mischungen (A bis D) werden bei 285°C zu 140 $\mu$m dicken gestreckten Folien schmelzextrudiert. Diese Folien werden dann bei 85°C auf das 3,3-fache ihrer ursprünglichen Länge längsgestreckt, anschließend im Querstreckrahmen bei 90°C auf das 3,5-fache ihrer ursprünglichen Breite quergestreckt und bei 220°C thermofixiert. Die Polyesterfolien sind dann 12 $\mu$m dick (nachfolgend "Folie A" bis "Folie D" genannt). Zu Vergleichszwecken wird eine herkömmliche biaxial gestreckte Polyäthylenterephthalatfolie ("Folie E") wie oben beschrieben hergestellt.

*Oberflächenbehandlung*

An de Folien A bis D und E wird eine NCD- bzw. ACD-Behandlung unter den in Tabelle 1 aufgeführten Behandlungen durchgeführt.

**0 000 386**

TABELLE 1

| Behandlung: | NCD-Behandlung | ACD-Behandlung |
|---|---|---|
| Apparat | Mehrzweck-Oberflächen-behandlungsgerät, Modell FE—X2 (Hersteller: TORAY IND.) | entspricht der linken Spalte |
| zugeführtes Stickstoffgas | hochreines Stickstoffgas (Reinheitsgrad: über 99,999 Volumprozent, Feuchtigkeit: unter 0.03% rel. Feuchtigkeit | |
| Behandlungs-atmosphäre | Stickstoff (Konzentration des Rest-sauerstoffs: <0,01 Volumprozent | Luft |
| Generator | Hochfrequenzgenerator HF—401 (Hersteller: Kasuga Electric Co.) | entspricht der linken Spalte |
| aufgewandte elektrische Energie | 30 W.min/m² | entspricht der linken Spalte |

Die in Tabelle 2 aufgeführten Auswertungsergebnisse für die Folien lassen folgendes erkennen:
a) die erfindungsgemäßen Folien besitzen eine ausgezeichnete Bedruckbarkeit und Verbundfestigkeit. Darüber hinaus weisen sie auch unter harten Bedingungen, wie z.B. einer Kochbehandlung oder einer Alterung bei hoher Temperatur und hoher Feuchtigkeit nur eine sehr geringe Abnahme des Haftvermögens auf. Ihr Haftvermögen reicht für den praktischen Gebrauch stets aus.
b) Bei unbehandelten Folien, an denen keine NCD-Behandlung durchgeführt wird, sind die Bedruckbarkeit und die Verbundfestigkeit unzureichend.
c) Auch wenn die ACD-behandelten Folien(alkylenoxid)glykole enthalten, zeigen sie keine großen Verbesserungen; außerdem tritt bei ihnen einer Kochbehandlung oder einer Alterung bei hoher Temperatur und hoher Feuchtigkeit eine beträchtliche Verminderung des Haftvermögens ein.
d) Bei der herkömmlichen PET-Folie ergibt die NCD-Behandlung nur eine sehr geringe Verbesserung des Haftvermögens; die behandelte Folie reicht daher für den praktischen Gebrauch nicht aus.

TABELLE 2

| Bezeich-nung der Probe | copolymerisier-tes Poly(alkylen-oxid)glycol | Oberflächen-behandlung | Bedruck-barkeit | | Verbundfestig-keit (g/cm) | | | Bemerkungen |
|---|---|---|---|---|---|---|---|---|
| | | | a | b | c | b | d | |
| A – 1 | PEG | NCD | 5 | 5 | 170 | 144 | 137 | erfindungsge-mäßes Produkt |
| B – 1 | PPG | NCD | 5 | 5 | 171 | 148 | 141 | ,, |
| C – 1 | PEG.PPG | NCD | 5 | 5 | 179 | 148 | 139 | ,, |
| D – 1 | PTMG | NCD | 5 | 5 | 190 | 155 | 143 | ,, |
| E – 1 | – | NCD | 3 | 3 | 90 | 81 | 79 | Vergleichs-produkt |
| A – 2 | PEG | ACD | 4–5 | 1 | 158 | 75 | 47 | ,, |
| B – 2 | PPG | ACD | 4–5 | 1 | 163 | 79 | 49 | ,, |
| C – 2 | PEG.PPG | ACD | 4–5 | 1 | 160 | 82 | 55 | ,, |
| D – 2 | PTMG | ACD | 4–5 | 1 | 162 | 80 | 58 | ,, |
| E – 2 | – | ACD | 2 | 1 | 64 | 39 | 31 | ,, |
| A – 3 | PEG | unbehandelt | 2 | 2 | 81 | 72 | 70 | ,, |
| B – 3 | PPG | ,, | 2 | 2 | 75 | 70 | 71 | ,, |
| C – 3 | PEG.PPG | ,, | 2 | 2 | 85 | 76 | 75 | ,, |
| D – 3 | PTMG | ,, | 2 | 2 | 80 | 74 | 75 | ,, |
| E – 3 | – | ,, | 1 | 1 | 48 | 40 | 35 | ,, |

a: gemessen unmittelbar nach dem Bedrucken.

b: gemessen nach einer 48stündigen Alterung bei 50°C, 100% rel. Feuchtigkeit

c: gemessen nach einer 48stündigen Alterung bei Raumtemperatur und-feuchtigkeit

d: gemessen nach einer 30 Minuten dauernden Kochbehandlung

Beispiel 2

Das mit 5 Gewichtsprozent PEG·PPG (durchschnittliches Molekulargewicht 15 000) copolymerisierte PET wird wie in Beispiel 1 beschrieben hergestellt. Das resultierende Polymerisat wird mit Polyäthylenterephthalat gemischt und daraus wie in Beispiel 1 biaxial gestreckte Folien mit 0,08 bis 3,5 Gewichtsprozent PEG·PPG angefertigt. Die NCD-Behandlung wird an diesen Folien unter den gleichen Bedingungen wie in Beispiel 1 ausgeführt. Anschließend wird das Haftvermögen dieser Folien bewertet. Die Ergebnisse (Tabelle 3) lassen folgendes erkennen:

Wenn der Gehalt an Poly(alkylenoxid)glykol unter 0,1 Gewichtsprozent liegt, ist das Haftvermögen nur ungenügend verbessert. Beträgt der Gehalt dagegen über 3,0 Gewichtsprozent, so ist die Folientransparenz beeinträchtigt, und die Folie zeigt außerdem nach einer Kochbehandlung oder einer Alterung unter hoher Temperatur und Feuchtigkeit eine starke Verminderung des Haftvermögens.

Beispiel 3

Das wie in Beispiel 2 mit PET·PPG copolymerisierte PET (mit 5 Gewichtsprozent PEG·PPG) wird mit Polyäthylenterephthalat gemischt und wie in Beispiel 1 zu einer biaxial gestreckten Folie verarbeitet, die 0,6 Gewichtsprozent PEG·PPG enthält und 12 $\mu$m dick ist. Zu Vergleichszwecken wird

7

eine herkömmliche biaxial gestreckte Polyäthylenterephthalatfolie von 12 μm Dicke jedoch ohne PEG.PPG-Einheiten in der gleichen Weise hergestellt. Diese Folien werden unter den Bedingungen von Beispiel 1 NCD-behandelt, jedoch mit einem zwischen 10 und 100 W·min/m² variierenden Energieaufwand. Die Ergebnisse (Tabelle 4) lassen folgen-des erkennen:

Die NCD-behandelten, erfindungsgemäßen PET-Folien mit Poly(alkylenoxid)glykolen haben ein ausgezeichnetes Haftvermögen, und zwar nicht nur unmittelbar nach NCD-Behandlung, sondern auch. nach dem Altern. Wenn die NCD-Behandlung dagegen an der herkömmlichen Polyäthylenterephthalatfolie durchgeführt wird, ist das Haftvermögen bei geringer elektrischer Energie nicht in ausreichendem Maße verbessert. Wird im Gegensatz dazu mit hoher elektrischer Energie gearbeitet, so weisen diese folien eine starke Abnahme der Kochbeständigkeit und der Beständigkeit gegen hohe Temperatur und hohe Feuchtigkeit auf. Dies bedeutet, daß man in diesen Fällen die hier beschriebene Folie mit herevorragender Bedruckbarkeit nicht erzielen kann.

Beispiel 4

An der wie in Beispiel 3 hergestellten biaxial gestreckten Folie mit 0,6% PEG·PPG werden NCD-Behandlungen unter den Bedingungen der Tabelle 1 ausegeführt, wobei jedoch die Konzentration des Restsauerstoffs in der Behandlungsatmosphäre verändert wird. Die Ergebnisse in Tabelle 5 zeigen deutlich, daß die Konzentration des Restsauerstoffs unter 0,1 Volumprozent liegen muß.

TABELLE 3

| Bezeich-nung der Probe | Gehalt an PEG.PPG (Gewichts-prozent) | Bedruck-barkeit | | Verbundfestigkeit (g/cm) | | | Bemerkungen |
|---|---|---|---|---|---|---|---|
| | | a | b | c | b | d | |
| C — 4 | 0,08 | 4 | 4 | 130 | 124 | 113 | Vergleichsprodukt |
| C — 5 | 0,1 | 5 | 5 | 165 | 147 | 138 | erfindungsgem.Produkt |
| C — 6 | 0,3 | 5 | 5 | 176 | 149 | 140 | ,, |
| C — 7 | 1,0 | 5 | 5 | 175 | 150 | 139 | ,, |
| C — 8 | 2,5 | 5 | 5 | 173 | 148 | 141 | ,, |
| C — 9 | 3,0 | 5 | 5 | 170 | 139 | 134 | ,, |
| C — 10 | 3,5 | 4 | 3 | 166 | 104 | 95 | Vergleichsprodukt |

Die Meßbedingungen a, b, c und d sind die gleichen wie in Tabelle 2.

**0 000 386**

TABELLE 4

| Bezeich-nung der Probe | aufgewandte elektr. Energie (W.min/m²) | Bedruck-barkeit | | Verbundfestigkeit (g/cm) | | | Bemerkungen |
|---|---|---|---|---|---|---|---|
| | | a | b | c | b | d | |
| C – 11 | 10 | 5 | 4 | 165 | 150 | 140 | erfindungsgem.Produkt |
| C – 12 | 15 | 5 | 5 | 180 | 150 | 143 | ,, |
| C – 13 | 30 | 5 | 5 | 182 | 153 | 145 | ,, |
| C – 14 | 60 | 5 | 5 | 180 | 148 | 143 | ,, |
| C – 15 | 100 | 5 | 5 | 170 | 140 | 131 | ,, |
| E – 4 | ,10 | 1 | 1 | 51 | 40 | 40 | Vergleichsprodukt |
| E – 5 | 15 | 2 | 1 | 60 | 52 | 45 | ,, |
| E – 6 | 30 | 3 | 3 | 90 | 81 | 79 | ,, |
| E – 7 | 60 | 4 | 4 | 100 | 90 | 85 | ,, |
| E – 8 | 100 | 5 | 4 | 108 | 75 | 63 | ,, |

Die Meßbedingungen a, b, c und d sind die gleichen wie in Tabelle 2.

TABELLE 5

| Bezeich-nung der Probe | Konzentration des Restsauerstoffs (Vol.–%) | Bedruck-barkeit | | Verbund-festigkeit (g/cm) | | Bemerkungen |
|---|---|---|---|---|---|---|
| | | a | b | c | b | |
| C – 16 | 0,01 | 5 | 5 | 182 | 153 | erfindungsgem.Produkt |
| C – 17 | 0,05 | 5 | 5 | 181 | 153 | ,, |
| C – 18 | 0,07 | 5 | 4–5 | 175 | 148 | ,, |
| C – 19 | 0,1 | 5 | 4–5 | 163 | 145 | ,, |
| C – 20 | 0,12 | 5 | 3 | 160 | 95 | Vergleichsprodukt |
| C – 21 | 0,2 | 4–5 | 1 | 160 | 81 | ,, |

Die Meßbedingungen a, b und c sind die gleichen wie in Tabelle 2

# 0 000 386

<div align="center">Beispiel 5</div>

*Polymerisation des mit PEG copolymerisierten PET*

Dimethylterephthalat (95 Gewichtsteile), Äthylenglykol (70 Gewichtsteile) und Calciumacetat (0,05 Gewichtsteile) werden gemischt, und der Esteraustausch wird nach dem bekannten Verfahren durchgeführt. Anschließend wird die Temperatur dieser Mischung auf 225°C erhöht, Antimontrioxid (0,04 Gewichtsteile) und phosphorige Säure (0,02 Gewichtsteile) werden hinzugefügt, und die Mischung wird während einer Stunde polykondensiert. Nach dem Zusetzen von PEG (durchschnittliches Molekulargewicht 6 000, 5 Gewichtsteile) wird die Polykondensation dann über etwa drei Stunden bei 280°C, 0,4 mbar fortgeführt.

Das entstandene Polymerisat hat eine Intrinsicviskosität von 0,620 und einen Erweichungspunkt von 257°C und enthält 5 Gewichtsprozent an copolymerisiertem PEG.

*Folienherstellung*

Das obengenannte Copolymerisat wird mit herkömmlichem PET gemischt (Intrinsicviskosität 0,618) und wie in Beispiel 1 zu einer biaxial gestreckten Folier mit einer Dicke von 12 $\mu$m verarbeitet. Diese Folie wird nach der NCD-Behandlung ausgewertet. Die Ergebnisse in Tabelle 6 zeigen klar, daß das Zusetzen von PEG zum Zeitpunkt der Polykondensation ebenso wirksam ist wie zum Zeitpunkt des Esteraustausches (wie in Beispiel 1 beschrieben).

<div align="center">Beispiel 6</div>

*Polymerisation des mit PEG.PPG copolymerisierten PET*

Dimethylterephthalat (100 Gewichtsteile), Äthylenglykol (70 Gewichtsteile), PEG·PPG (durchschnittliches Molekulargewicht 18 000, 3 Gewichtsteile) und Calciumacetat (0,09 Gewichtsteile) werden gemischt, und der Esteraustausch wird nach dem bekannten Verfahren durchgeführt. Dieser Mischung werden Antimontrioxid (0,03 Gewichtsteile) und Trimethylphosphat (0,04 Gewichtsteile) zugesetzt. Die temperatur wird allmählich erhöht, und die Polykondensation findet schließlich bei 287°C, 0,67 mbar statt. Die Intrinsicviskosität dieses Polymerisats ist 0,621, sein Erweichungspunkt liegt bei 259,5°C, und es enthält 3 Gewichtsprozent PEG·PPG.

*Folienherstellung*

Eine biaxial gestreckte Folie mit 0,5 Gewichtsprozent PEG·PPG wird wie in Beispiel 1 beschrieben hergestellt. Diese Folie wird nach der NCD-Behandlung ausgewertet.

Die Ergebnisse in Tabelle 6 zeigen deutlich, daß die Zugabe von PEG·PPG zum Zeitpunkt des Esteraustausches ebenso wirksam ist wie zum Zeitpunkt der Polykondensation.

<div align="center">TABELLE 6</div>

| Bezeichung der Probe | copolymerisiertes Polyalkylenglykol | Bedruckbarkeit | |
|---|---|---|---|
| | | a | b |
| A — 4 | PEG | 5 | 5 |
| C — 22 | PEG.PPG | 5 | 5 |

Die Meßbedingungen a und b sind die gleichen wie in Tabelle 2

**Patentanspruch**

Biaxial gestreckte und in Stickstoffatmosphäre coronabehandelte Polyesterfolie, dadurch gekennzeichnet, daß sie aus einem Copolyester aufgebaut ist aus

A Resten zweibasischer Säuren, in denen mindestens 90 Molprozent aus Terephthalsäureeinheiten bestehen und

B Glykolen, die 0,1 bis 3,0 Gewichtsprozent eines oder mehrerer Poly(alkenoxid)glykole mit einem Molekulargewicht von 500 bis 40 000, vorzugsweise 800 bis 30 000 enthalten

und sie mit einer Energie zwischen 10 und 100 W·min/m² coronabehandelt ist.

**Claim**

Biaxially stretched polyester film which is corona-treated in a nitrogen atmosphere, characterised in that it is made up of a copolyester comprising

A a residue of dibasic acids wherein at least 90 mole % are terephthalic acid units and

**0 000 386**

B glycols which contain from 0.1 to 3.0% by weight of at least one poly(alkylene oxide)glycols having a molecular weight in the range from 500 to 40,000, preferably from 800 to 30,000
and that is is corona-treated at an energy ranging between 10 and 100 W · min/m².

**Revendication**

Feuille de polyester biaxialement étirée et traitée par décharge corona dans une atmosphère d'azote, caractérisée en ce qu'elle est constituée par un copolyester comprenant
A des restes d'acides dibasiques dont au moins 90 mole % sont des unités d'acide téréphtalique et
B des glycols contenant de 0,1 à 3,0% en poids d'un ou de plusieurs poly(oxyde d'alkylène)glycols ayant un poids moléculaire entre 500 et 40 000, de préférence entre 800 et 30 000
et en ce qu'elle est traitée par une décharge corona dissipant une énergie comprise entre 10 et 100 W.mn/m².